# EUROPEAN PATENT APPLICATION

(11) **EP 4 756 476 A1**
(43) Date of publication of application: **10.06.2026**
(21) Application number: 25219676.1
(22) Date of filing: 01.12.2025
(51) Int. Cl.: G01S 5/00, G01S 5/02, H04W 4/029, G01S 3/46

(54) **POSITIONING SYSTEM AND CORRESPONDING METHOD**

(30) Priority: 04.12.2024 IT 202400027477
(71) Applicant: I2T2C S.r.l., 20122 Milano (IT)
(72) Inventor: TARTAGLIA, Francesco Mattia, I-20122 Milano (IT)
(74) Representative: Buzzi, Notaro & Antonielli d'Oulx S.p.A.

(57) **Abstract**

A positioning system (100) usable in an operating environment (20) is described, comprising:
- one or more tags (110) comprising an identifier, a transceiver, and a control unit configured to periodically send localization messages (810) comprising the identifier via the transceiver;
- a plurality of locators (120) comprising a transceiver and a control unit configured to receive one or more localization messages via the transceiver, and transmit a reading message (820) comprising the identifier of the tag;
- one or more gateways (130) comprising a transceiver and a control unit configured to receive one or more reading messages via the transceiver, and forward the one or more reading messages via the transceiver; and
- a remote processing system (180) comprising spatial information (20a; 20b) of said operating environment, the remote processing system being configured to receive the one or more reading messages forwarded by the one or more gateways, determine an approximate position of a tag within the operating environment, and apply a correction to the approximate position.

## Description

### Field of the invention

The present invention relates to positioning systems. For example, such systems are usable in open environments such as parking lots, ports, railway stations, or campsites, or in closed environments such as buildings, covered parking lots, or subways.

### Prior art

Positioning systems usable in open spaces already known and available on the market use various technologies including GPS (Global Positioning System), LoRa (Long Range) networks, Ultra-Wideband (UWB), Bluetooth Low Energy Angle of Arrival (BLE AoA) and radar-based solutions. Although each technology offers specific advantages, all present significant limitations in providing a beneficial combination of flexibility and precision required for advanced positioning applications.

For example, GPS technology represents a consolidated solution that offers the significant advantage of not requiring additional infrastructure in the field. Through an antenna integrated into the device, a GPS-based system is capable of determining the position using the existing satellite network, achieving precision on the order of 10 meters, even under optimal conditions. This limitation becomes more pronounced in urban environments where multipath effects significantly degrade performance. Areas with partial sky visibility present particular challenges, as the technology requires a clear line of sight with multiple satellites for optimal operation. Atmospheric interference can also influence accuracy. GPS technology presents further substantial criticalities, mainly related to the high energy consumption of the receiving device.

An often overlooked but crucial aspect concerns the need for a supplementary communication system for transmitting the collected data, which can manifest in different forms: the use of a SIM card in conventional GPS trackers, transmission via VHF signal, as occurs in AIS devices widely used in the nautical field, or through alternative systems. This need for a dual communication system further increases the complexity and energy consumption of the entire system.

LoRa technology stands out for particularly interesting characteristics in terms of energy efficiency and operational range. Positioning systems based on LoRa offer extremely low energy consumption combined with a very long-range transmission capability, reaching operational distances of up to 10 kilometers.

However, when used in a multilateration configuration for positioning, this technology reveals its main weakness: significantly limited precision, with error margins extending on the order of hundreds of meters. This characteristic compromises its use in applications requiring accurate localization.

UWB technology theoretically represents an ideal choice for applications requiring extreme precision, guaranteeing accuracy at the centimeter level. However, its applicability in large-scale outdoor environments is severely limited by significant infrastructure constraints. The need for wired connections between detection hubs entails not only implementation complexity but also high costs for extensive installations. These infrastructure limits, combined with the high implementation costs, restrict its use primarily to indoor applications or very circumscribed outdoor areas.

BLE systems with AoA technology present an interesting combination of advantages and limitations. On one hand, they offer extremely low energy consumption and very low-cost tags, while guaranteeing high detection precision. On the other hand, practical implementation requires the placement of detection hubs at considerable heights, typically between 10 and 12 meters, to obtain an effective detection cone of about 30 meters in diameter. The high cost of the detectors, combined with the need to install a significant number of them to cover large areas, represents a substantial obstacle to large-scale adoption.

Finally, traditional radar systems are characterized by relative infrastructure simplicity, representing a potentially attractive solution for outdoor positioning. However, their practical applicability is compromised by a considerable margin of error, on the order of twenty meters. This limitation in detection precision significantly restricts their usefulness in applications requiring accurate localization.

In light of the above, existing solutions show fundamental inadequacies in satisfying various critical requirements for modern positioning applications. The simultaneous achievement of sub-metric precision and long-range capability remains elusive in all current technologies. The implementation of these systems over large areas involves high costs, while infrastructure requirements are often excessive. Performance varies significantly in different environmental conditions, limiting reliability.

Current solutions fail to provide energy-efficient operation for prolonged periods, while scalability typically results in significant performance degradation. The complexity of implementation and maintenance procedures further hinders widespread adoption.

Therefore, the limitations of current technologies create a clear need for a positioning solution capable of offering greater precision and flexibility. The industry requires a system capable of providing consistent sub-metric precision over extended distances while simultaneously offering flexible implementation options.

Such a solution must operate with reduced infrastructure requirements compared to existing technologies, allowing an economically advantageous implementation on various scales. The system should maintain reliable performance in different environmental conditions while operating with greater energy efficiency. Furthermore, the solution must offer simplified maintenance procedures and demonstrate the ability to scale without compromising performance metrics.

### Object and summary

The present description aims to provide solutions that allow the localization of objects in open spaces.

In order to achieve the aforementioned object, the solution has as its object a positioning system usable in open spaces with the characteristics specified in the accompanying claim 1. The claims also relate to a corresponding method.

The claims form an integral part of the teaching provided by the present solution.

As mentioned previously, various embodiments of the present description relate to solutions for the localization of objects in open spaces.

In particular, various embodiments of the present description relate to a positioning system usable in an operating environment, comprising one or more tags, a plurality of locators, one or more gateways, and a remote processing system.

The tags comprise an identifier, a transceiver, and a control unit configured to periodically send localization messages comprising the identifier via the transceiver, wherein the sending cadence of the localization messages is determined by an advertising interval.

Each locator comprises a transceiver and a control unit configured to receive one or more localization messages via the transceiver, associate with each received localization message a reception time and a power index, and transmit a reading message comprising the tag identifier, the reception time and the power index of the localization message.

The one or more gateways comprise a transceiver and a control unit configured to receive one or more reading messages via the transceiver, and forward the one or more reading messages via the transceiver.

Finally, the remote processing system comprises spatial information of said operating environment, and is configured to receive the one or more reading messages forwarded by the one or more gateways, determine an approximate position of a tag within the operating environment based on the reception times and the power indices using a variable multilateration algorithm, and apply a correction to the approximate position based on the spatial information of the operating environment to obtain a position of a tag within the operating environment.

Furthermore, embodiments of the present description also relate to a corresponding method.

### Brief description of the figures

The invention will now be described with reference to the accompanying figures, provided by way of nonlimiting example only, in which:
- Figure 1 shows an embodiment of a positioning system implemented according to the solution described herein;
- Figure 2 shows a block diagram of a tag implemented in accordance with the solution described herein;
- Figure 3 shows a block diagram of a locator implemented in accordance with the solution described herein; and
- Figure 4 shows a block diagram of a gateway implemented in accordance with the solution described herein.

### Detailed description

In the following description, one or more specific details are illustrated, for the purpose of providing an in-depth understanding of examples of embodiments of this description. Embodiments may be obtained without one or more of the specific details or with other procedures, components, materials, etc. In other cases, known operations, materials or structures are not illustrated or described in detail so that certain aspects of the embodiments are not rendered unclear.

A reference to "an embodiment" within the context of the present description is intended to indicate that a particular configuration, structure, or characteristic described with reference to the embodiment is included in at least one embodiment. Therefore, phrases such as "in one embodiment" that may be present in one or more points of the present description do not necessarily refer to the same embodiment.

Furthermore, particular conformations, structures or characteristics may be combined in any suitable way in one or more embodiments.

The references used here are provided merely for convenience and therefore do not define the scope of protection or the scope of the embodiments.

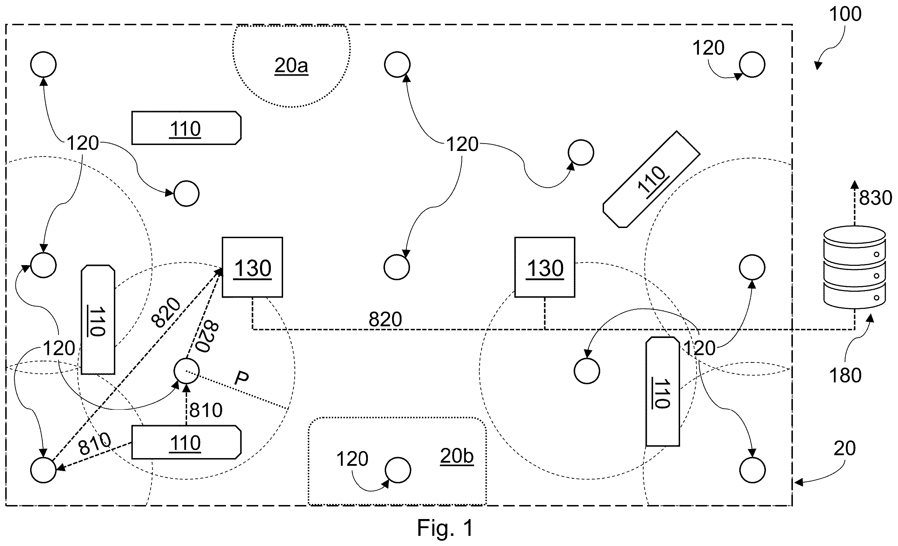

Figure 1 illustrates a localization system 100 usable in open environments such as, for example, parking lots, ports, railway stations, and campsites, generally indicated as operating environment 20.

As shown in Figure 1, the localization system 100 comprises a plurality of tags 110, wherein each tag 110 is provided on an object such as, for example, a vehicle or a vessel, a plurality of locators 120, one or more gateways 130, and a remote processing system 180.

In various embodiments, the localization system 100 is configured to determine the position of objects, such as vehicles or vessels, located within the operating environment 20. In this regard, each object whose position is intended to be detected within the operating environment 20 is provided with a tag 110.

Each tag 110 is configured to transmit signals for the localization of the tag 110 in the operating environment 20. The signals transmitted by each tag 110 are received by a plurality of locators, or anchors, 120.

In particular, a locator, or anchor, 120 can receive a localization signal originating from a tag 110 if it is positioned sufficiently close to the tag 110. For example, as shown in Figure 1, each locator 120 can have a range P, i.e., a radius defining a portion of the operating environment 20 in which the signals transmitted by a tag 110 are received by the locator 120. Conversely, if a tag 110 is located outside the range P of a locator 120 it might not be detected, or the transmission of localization signals towards the locator 120 might occur with errors.

The locators 120 are arranged in the operating environment 20 so as to allow a tag 110 to be detected by at least one locator 120, at any point of the operating environment 20. For this purpose, the number of locators 120 to be installed in the operating environment 20 is determined accordingly, based on the range P of each locator 120, and on the area of the operating environment 20.

In such embodiments, the tags 110, the locators 120 and the gateways 130 constitute nodes of a mesh network implemented via their respective Bluetooth radio modules. Within the mesh network, each node, i.e., each tag 110, each locator 120, and each gateway 130, is configured to transmit packets to all nodes located within its own range P, and similarly to receive packets from all reachable nodes.

Each node of the mesh network is provided with a unique identifier, which is included in the transmitted packets to indicate the designated recipient. If a received packet contains an identifier corresponding to that of the receiving node, the packet is not retransmitted and an acknowledgment (ACK) message is generated towards the transmitting node. Conversely, if the identifier does not correspond to that of the receiving node, the packet is retransmitted, allowing the propagation of the information along the mesh network and facilitating the widespread diffusion of data within the operating environment 20.

Furthermore, each node of the mesh network, i.e., each tag 110, each locator 120, and each gateway 130, is equipped with a temporary storage queue, for example implemented according to a FIFO (First-In, First-Out) logic and included in their respective Bluetooth radio modules. This queue is configured to contain messages intended for transmission and those received that need to be retransmitted in the mesh network. In this way, packets are handled in order of arrival, ensuring that each message is transmitted or retransmitted in a sequential and orderly manner. The presence of the queue also allows avoiding packet loss in case of momentary congestion of the radio channel, ensuring continuity and reliability in the propagation of information between the nodes of the mesh network.

Each tag 110, each locator 120, and each gateway 130 is configured to receive and transmit information via a respective Bluetooth radio module. In particular, each device can transmit and receive data via its respective Bluetooth radio module on Bluetooth Classic or Bluetooth Low Energy (BLE) channels.

Therefore, the tags 110, the locators 120, and the gateways 130 can transmit and receive data on 79 Bluetooth Classic frequency bands, each with a width of 1 MHz, included in the 2.4 GHz ISM band (2.400-2.4835 GHz), or on 40 channels of 2 MHz each, always in the same 2.4 GHz ISM band, used in Bluetooth Low Energy.

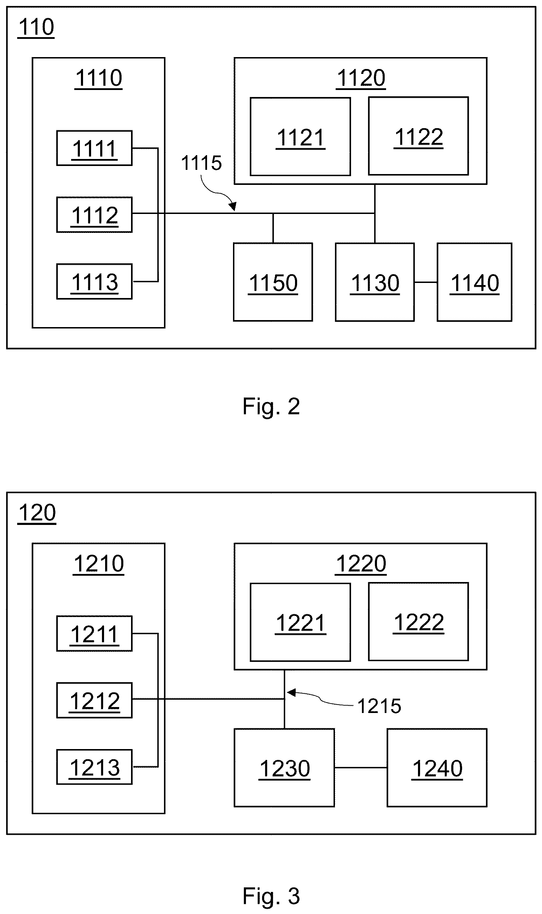

Figure 2 illustrates a block diagram depicting a tag 110.

As shown in Figure 2, the tag 110 comprises a control unit 1110, a transceiver 1120, a power module 1130, a battery 1140, and one or more sensors 1150.

In turn, the control unit 1110 comprises a processor 1111, a system memory 1112 such as, for example, a DRAM or SRAM memory, and a non-volatile memory 1113. The processor 1111, the system memory 1112, and the non-volatile memory 1113 are interconnected and coupled to the peripherals, i.e., the transceiver 1120, the power module 1130, and the one or more sensors 1150 via a system bus 1115.

In various embodiments, the control unit 1110 is configured to implement, via specific software code residing in the non-volatile memory 1113 and executed via the processor 1111 and the system memory 1112, the characteristics of the tag 110 according to the present description.

In various embodiments, the control unit 1110 is configured to receive via the transceiver 1120 one or more update packets 840 containing software code, and consequently perform an update of the software code residing in the non-volatile memory 1113 according to OTAP, Over-The-Air Programming, update procedures, per se known.

In various embodiments, the power module 1130 of the tag 110 comprises a configurable input port to interchangeably couple the power module 1130 to the battery 1140, or to an external power source.

The power module 1130 comprises a first high-efficiency switching step-down DC/DC regulation stage, and a second LDO, Low-Dropout, DC/DC regulation stage, which provides a stable and low-noise output voltage.

Based on the application requirements, the power module 1130 can be configured to employ the first switching regulation stage, or the second LDO regulation stage.

For example, in applications requiring maximum energy efficiency, the power module 1130 is configured to use the first switching regulation stage, while in applications requiring a more stable voltage with less noise, the power module 1130 is configured to use the second LDO regulation stage.

The transceiver 1120 comprises a Bluetooth radio module 1121 that supports the Bluetooth Low Energy standards, in particular according to the Bluetooth 5.1 standard, and Bluetooth Mesh, and comprises one or more antennas 1122.

In particular, the transceiver 1120 can receive and transmit data on any of the Bluetooth Classic channels (79 channels of 1 MHz, between 2.402 and 2.480 GHz) and Bluetooth Low Energy (40 channels of 2 MHz, subdivided into 3 advertising channels and 37 data transfer channels), in the frequency bands used by Bluetooth, i.e., the 2.4 GHz ISM band (2.400-2.4835 GHz).

The transceiver 1120 further comprises a cryptographic module for securely managing Mesh network keys, and a non-volatile memory for storing network configurations, and is configured to encrypt transmitted messages. For example, the transceiver 1120 is configured to encrypt messages using the AES128 encryption algorithm.

The one or more sensors 1150 can comprise accelerometers, temperature sensors, magnetic field sensors, microphones, and/or sensors of other types.

In various embodiments, the control unit 1110 is configured to acquire data from the one or more sensors 1150, and consequently compare the acquired data with a threshold value, or a range of values. In particular, the control unit 1110 can determine the occurrence of an event in response to verifying that one or more values acquired from the one or more sensors 1150 exceeds a predetermined threshold value.

For example, in embodiments of the present solution intended for use in railway stations, the control unit 1110 can determine that a locomotive, provided with a tag 110, begins to move by verifying that the data acquired by means of an accelerometer, included in the one or more sensors 1150, exceeds a predetermined acceleration threshold value.

As described above, each tag 110 is configured to transmit localization signals towards one or more locators 120 via the transceiver 1120.

In various embodiments, each tag 110 transmits localization messages 810 via Bluetooth in a periodic manner. In this regard, each tag 110 can send localization messages 810 in broadcast mode, so as to transmit the localization message 810 to all neighboring locators 120 without the need to establish a direct connection (flooding).

In particular, the tag 110 constitutes a node of the mesh network implemented via its respective Bluetooth radio module. Within the mesh network, the tag 110 is configured to transmit packets to all nodes located within its own range P, and similarly to receive packets from all reachable nodes.

The tag 110 is provided with a unique identifier, which is included in the transmitted packets to indicate the designated recipient. If a received packet contains an identifier corresponding to that of the tag 110, the packet is not retransmitted and an acknowledgment (ACK) message is generated towards the transmitting node. Conversely, if the identifier does not correspond to that of the tag 110, the packet is retransmitted, allowing the propagation of the information along the mesh network and facilitating the widespread diffusion of data within the operating environment 20.

Furthermore, the tag 110 is equipped with a temporary storage queue, for example implemented according to a FIFO (First-In, First-Out) logic and included in its respective Bluetooth radio module. This queue is configured to contain messages intended for transmission and those received that need to be retransmitted in the mesh network. In this way, packets are handled in order of arrival, ensuring that each message is transmitted or retransmitted in a sequential and orderly manner. The presence of the queue also allows avoiding packet loss in case of momentary congestion of the radio channel, ensuring continuity and reliability in the propagation of information between the nodes of the mesh network.

As will be better described later in the present description, the control unit 1110 is configured to initiate the transmission of the localization messages 810, performed via the transceiver 1120, according to specific configuration settings stored in the non-volatile memory 1113.

In a first configuration, the control unit 1110 initiates the transmission of the localization messages 810 concurrently with the power-on of the tag 110.

In a second configuration, the control unit 1110 initiates the transmission of the localization messages 810 in response to detecting an event, indicated by data coming from the one or more sensors 1150. In other words, the control unit 1110 initiates the transmission of the messages in response to determining the occurrence of an event, and consequently continues to transmit localization messages 810 at regular time intervals. This advantageously allows the present solution to reduce energy consumption, and consequently increase the autonomy of the tags 110.

In a third configuration, the control unit 1110 performs the transmission of each localization message 810 in response to detecting an event, indicated by data originating from the one or more sensors 1150. In this way, each localization message 810 is sent in response to the occurrence of a specific event, such as the movement of a locomotive in a railway station.

In various embodiments, a localization message 810 is substantially a Bluetooth advertising packet, which can be transmitted on the primary Bluetooth advertising channels 37 (2402 MHz), 38 (2426 MHz), and 39 (2480 MHz), and on each of the Bluetooth Low Energy channels, thereby extending the transmission also to the channels normally dedicated to data transfer, such as channel 0 (2402 MHz), channel 19 (2440 MHz) or channel 36 (2472 MHz), in addition to the remaining channels of the band reserved for Bluetooth.

In various embodiments, the transmission of the message 810 occurs in a repeated and sequential manner, sending a copy of the packet on each considered channel. Each transmission is performed by keeping the frequency fixed on the selected channel, without performing any frequency hopping. In other words, the frequency hopping mechanism typical of Bluetooth communications is disabled, so as to ensure that each message is transmitted completely and stably on the chosen channel, ensuring repeatability and predictability in reception.

For example, a transmission of a localization message 810 can occur on all 40 available channels of the Bluetooth Low Energy standard. In this case, a tag 110 begins the transmission of the localization message 810 on BLE channel 0, and consequently repeats the transmission of the localization message 810 for each available BLE channel, up to BLE channel 39.

In various embodiments, each tag 110 can include configuration settings for the transmission of the localization message 810, for example stored in the non-volatile memory 1113 of the control unit 1110.

For example, such configuration settings can comprise an advertising interval D, i.e., a time interval that elapses between the transmission of a localization message 810 and the next one, and a transmission power W of the localization message 810, typically between 0 and +4 dBm.

In various embodiments, the tag 100, in particular the control unit 1110, is configurable to receive via Bluetooth, through the transceiver 1120, new configuration settings transmitted by another node of the Mesh network such as, for example, a locator 120 or a gateway 130.

For example, each tag 110 can be configured in a low power consumption mode P1 characterized by longer advertising intervals D and lower transmission powers W, or can be configured in a low latency mode P2 characterized by shorter advertising intervals and higher transmission powers W.

The low power consumption mode P1 can further comprise initiating the transmission of the localization messages 810 in response to detecting that one or more values, derived from the one or more sensors 1050, exceed a threshold value, in accordance with the second or third message transmission initiation configuration described above.

For example, in embodiments of the present solution intended for use in railway stations, a tag 110, provided on a train locomotive, can initiate the transmission of localization messages 810, or send each localization message 810, in response to detecting the movement of the locomotive by reading data from a sensor 1150 such as, for example, an accelerometer.

Therefore, configuring the tag 110 in low power consumption mode P1 allows maximizing the battery 1140 life, while configuring the tag 110 in low latency mode P2 allows updating the position of the tag 110 more frequently and favoring high performance of the positioning system 100.

Furthermore, the localization message 810 can comprise additional information, stored in the packet payload, comprising for example data from sensors, battery charge status, etc.

In various embodiments, each tag 110 can receive one or more localization messages 810 from another tag 110. In accordance with the solution described herein, the localization message 810 is received multiple times, as each tag 110 can repeat the transmission of the same localization packet 810 on multiple Bluetooth Low Energy channels.

Consequently, upon reception of each transmitted localization message 810, each tag 110 is configured to store only one copy of the received message 810. In particular, each tag 110 can exploit the repeated copies of the received localization messages 810 so as to correct any errors present in the localization message 810, due for example to transmission errors.

Furthermore, in various embodiments, each tag 110 during the reception of a localization message 810 from another tag 110, which comprises receiving multiple copies of the same localization message 810 from multiple Bluetooth Low Energy channels, stores the reception time of each copy of the localization message 810, associating it with the frequency of the BLE channel through which it is received. For example, if all 40 available BLE channels are employed in the localization system 100, a tag 110 transmits a localization message 810 40 times, once for each channel used. Consequently, the tag 110 or the locator 120 designated as the recipient of each localization message 810 temporarily stores the 40 messages received via each channel, and subsequently stores the transmission and reception times for each copy of the received localization message 810. At the end of the reception, the redundant copies of the localization message 810 are discarded, while the transmission and reception times for each copy of the localization message 810 transmitted on a respective BLE channel are maintained in memory.

In light of the above, the localization messages 810 sent periodically by each tag 110 facilitate the detection within the operating environment 20 of the position of the objects in which the tags 110 are provided.

For the purpose of precisely determining the position of each object, the localization messages 810 are received by a plurality of locators 120 so as to allow the application of a positioning algorithm that will be detailed further in the present description.

Figure 3 illustrates a block diagram depicting a locator 120.

Similarly to the tag 110 shown in Figure 2, the locator 120 comprises a control unit 1210, a transceiver 1220, a power module 1230, and a battery 1240.

In turn, the control unit 1210 comprises a processor 1211, a system memory 1212 such as, for example, a DRAM or SRAM memory, and a non-volatile memory 1213. The processor 1211, the system memory 1212, and the non-volatile memory 1213 are interconnected and coupled to the peripherals, i.e., the transceiver 1220 and the power module 1230, via a system bus 1215.

In various embodiments, the control unit 1210 is configured to implement, via specific software code residing in the non-volatile memory 1213 and executed via the processor 1211 and the system memory 1212, the characteristics of the locator 120 according to the present description.

In various embodiments, the control unit 1210 is configured to receive via the transceiver 1220 one or more update packets 840 containing software code, and consequently perform an update of the software code residing in the non-volatile memory 1213 according to OTAP, Over-The-Air Programming, update procedures, per se known.

In various embodiments, the power module 1230 of the locator 120 comprises a configurable input port to interchangeably couple the power module 1230 to the battery 1240, or to an external power source.

The power module 1230 comprises a first high-efficiency switching step-down DC/DC regulation stage, and a second LDO, Low-Dropout, DC/DC regulation stage, and has characteristics equivalent to the power module 1130 of the tag 110 described above.

The transceiver 1220 comprises a Bluetooth radio module 1221 configurable to operate both in Bluetooth Low Energy mode, in particular according to the Bluetooth 5.1 standard, and in Bluetooth Mesh mode, and comprising one or more antennas 1222.

In particular, the transceiver 1220 can receive and transmit data on any of the Bluetooth Classic channels (79 channels of 1 MHz, between 2.402 and 2.480 GHz) and Bluetooth Low Energy (40 channels of 2 MHz, subdivided into 3 advertising channels and 37 data transfer channels), in the frequency bands used by Bluetooth, i.e., the 2.4 GHz ISM band (2.400-2.4835 GHz).

The transceiver 1220 further comprises a cryptographic module for securely managing Mesh network keys, and a non-volatile memory for storing network configurations, and is configured to encrypt transmitted messages. For example, the transceiver 1220 is configured to encrypt messages using the AES128 encryption algorithm.

It can be noted how the transceiver 1220 of the locator 120 according to the present solution proves particularly advantageous compared to known solutions based on Bluetooth Angle of Arrival.

In fact, using BLE AoA technology for tag localization would require employing an RF switch to couple the Bluetooth radio to a multiple antenna array. Such an antenna array typically includes from 4 to 16 antennas, which are arranged linearly with a spacing of λ/2, wherein λ indicates the wavelength of the transmission carrier.

It is therefore evident that using BLE AoA technology involves an increase in the cost and size of the locators, as they require an RF switch and an array of antennas spaced about 6 cm apart from each other.

As described above, each locator 120 is configured to receive localization signals 810 from one or more tags 110 via the transceiver 1220. In various embodiments, each locator 120 receives the localization messages 810 transmitted in broadcast mode by the tags 110, which send copies of the packet on each of the considered Bluetooth channels, including the primary advertising channels 37 (2402 MHz), 38 (2426 MHz) and 39 (2480 MHz), as well as the Bluetooth Low Energy channels normally dedicated to data transfer (channels 0 - 36), such as channel 0 (2402 MHz), channel 19 (2440 MHz) or channel 36 (2472 MHz), in addition to the remaining channels of the band reserved for Bluetooth.

Therefore, each locator 120 can receive one or more copies of a localization message 810 from a tag 110. In accordance with the solution described herein, the localization message 810 is received multiple times, as each tag 110 can repeat the transmission of the same localization packet 810 on multiple Bluetooth Low Energy channels.

Each locator 120 is configured to store only one copy of the received message 810. In particular, each locator 120 can exploit the repeated copies of the received localization messages 810 so as to correct any errors present in the localization message 810, due for example to transmission errors.

Furthermore, in various embodiments, each locator 120 during the reception of a localization message 810 from another tag 110, which comprises receiving multiple copies of the same localization message 810 from multiple Bluetooth Low Energy channels, stores the reception time of each copy of the localization message 810, associating it with the frequency of the BLE channel through which it is received.

For example, if all 40 available BLE channels are employed in the localization system 100, a tag 110 transmits a localization message 810 40 times, once for each channel used. Consequently, the locator 120 designated as the recipient of each localization message 810 temporarily stores the 40 messages received via each channel, and subsequently stores the transmission and reception times for each copy of the received localization message 810. At the end of the reception, the redundant copies of the localization message 810 are discarded, while the transmission and reception times for each copy of the localization message 810 transmitted on a respective BLE channel are maintained in memory.

In other words, each localization message 810 is received multiple times, once for each channel used for transmission, keeping the frequency fixed on the selected channel and without performing any frequency hopping.

In this way, the locator 120 can use the round-trip time (RTT) of each transmission to perform ranging operations, ensuring repeatability, predictability and greater precision in distance determination.

The tags 110, the locators 120, and the gateways 130 communicate via a Mesh network. During a communication performed via the Mesh network, a locator 120 can receive messages or data that are not intended for that locator 120 but for a further device included in the positioning system 100 such as, for example, a further locator 120 or a gateway 130.

In such cases, the locator 120, specifically via the transceiver 1220, is configured to receive data packets via Bluetooth, and consequently verify if each packet is intended for it by using a unique identifier, such as a MAC address, for each device connected to the Mesh network.

In response to verifying that one or more received packets are intended for another device, the transceiver 1220 retransmits the one or more packets.

In further embodiments, the locator 120 is equipped with a temporary storage queue, for example implemented according to a FIFO (First-In, First-Out) logic and included in its respective Bluetooth radio module. This queue is configured to contain messages intended for transmission and those received that need to be retransmitted in the mesh network. In this way, packets are handled in order of arrival, ensuring that each message is transmitted or retransmitted in a sequential and orderly manner.

The presence of the queue also allows avoiding packet loss in case of momentary congestion of the radio channel, ensuring continuity and reliability in the propagation of information towards the gateway 130 and, more generally, within the mesh network.

The locator 120 is configured to receive localization messages 810 from one or more tags 110 positioned within the range P, and consequently forward the one or more received localization messages 810 towards a gateway 130. The forwarding of the localization messages 810 occurs via transmission of a new localization message 810, having a gateway 130 as the recipient, defined within the message 810 by a unique identifier such as, for example, a MAC address.

With reference to Figures 2 and 3, in various embodiments, the tags 110 and the locators 120 can be implemented using the same hardware platform, whose control unit is selectively configured via specific software code residing in a respective non-volatile memory and executed via respective processor and system memory.

For this purpose, the locator 120 can receive a configuration packet 850 comprising instructions to reconfigure the locator 120 to operate as a tag 110. A similar result can be obtained via the reception of an update packet 840 comprising software code to reconfigure a locator 120 to operate as a tag 110.

This reconfiguration is reversible, in fact, as anticipated above, it is also possible to perform the inverse operation of reconfiguring a tag 110 as a locator 120 via a configuration packet 850 comprising specific instructions, or via an update packet 840 comprising specific software code to reconfigure the tag 110 as a locator 120.

In other words, each tag 110 and each locator 120 are implementable via the same electronic system. In particular, this electronic system comprises:
- a transceiver 1120, 1220;
- a power module 1130, 1230;
- a battery 1140, 1240 coupled to the power module 1130, 1230;
- one or more sensors 1150; and
- a control unit 1110, 1210 comprising:
- a processor 1111, 1211;
- a system memory 1112, 1212;
- a non-volatile memory 1113, 1213.

Specifically, the non-volatile memory 1113 or 1213 comprises specific software code to selectively configure the electronic system to operate as a tag 110 or as a locator 120.

As shown in Figure 1, a locator 120 receives a localization message 810 from a tag 110 disposed on a monitored object within the operating area 20. Specifically, each locator 120 receives one or more localization messages 810 from neighboring tags 110, i.e., positioned within the range P of a respective locator 120.

In various embodiments, the locators 120 are configured to determine an arrival time T, associated with a power index (Received Signal Strength Indicator, RSSI) of the signal R, in response to receiving a localization message 810.

Specifically, since the transmission of a localization message 810 comprises the transmission of a finite number of copies of the localization message 810 on different BLE channels, the arrival time T is indicated as the set of reception times of each copy of the localization message 810.

For this purpose, the locators 120 are equipped with respective clocks, implemented via respective control units 1210, synchronized to the same time, so that all locators 120 determine reception times T of respective localization messages 810 consistent with those derived from other locators 120.

In particular, each locator 120 performs a first synchronization of its respective clock based on one or more timestamp values received from one or more gateways 130. For example, in various embodiments one or more gateways 130 can send a configuration packet 850 comprising a timestamp value usable for synchronizing the clocks.

Therefore, upon reception of a localization message 810 a locator 120 obtains from the localization message 810 the respective unique identifier U of the tag 110, together with optional data such as, for example, sensor readings and the battery 1140 status of the tag 110, and concurrently stores, for example in the system memory 1212, the detected reception time T and the power index of the signal R.

Consequently, each locator 120 sends to a gateway 130 the reading performed in a reading message 820, which comprises the unique identifier U of the detected tag 110, the reception time T, and the power index R measured by the respective locator 120, and further optional data.

In accordance with the solution described herein, the locators 120 send the reading messages 820 to the gateways 130 via the Mesh network. Therefore, the nodes of the mesh network, such as the locators 120, communicate using a "publish/subscribe" type model through a mesh network where messages are forwarded (flooding) from node to node until they reach the desired destination.

Thanks to the adoption of this typology, the devices can both receive and retransmit messages creating multiple and redundant paths through the network. Furthermore, messages can be protected through various security levels using network, application and device keys, and each node can act as a relay to extend the network coverage well beyond the transmission range of a single device.

Thanks to these characteristics, the Mesh network according to the present solution is capable of self-organizing and self-healing, with the nodes automatically managing the optimal paths for message delivery, while a message counter mechanism (IV Index) and sequential numbers prevent replay attacks and guarantee message freshness.

Furthermore, the sending of acknowledgment messages upon completion of a transmission allows the nodes of the Mesh network to compute a Round Trip Time, RTT, for each path defined within the network, so as to optimize the paths for data transmission according to per se known routing techniques and algorithms.

In particular, each locator 120 can initiate the transmission of a reading message 820, or can receive a reading message 820 from another locator 120, which is consequently retransmitted to nearby devices, privileging those with higher power, until it reaches the destination, thus implementing an adaptive routing technique. A second timestamp value can be added to the reading message 820 concurrently with the sending.

Each reading message 820 is consequently received by a gateway 130.

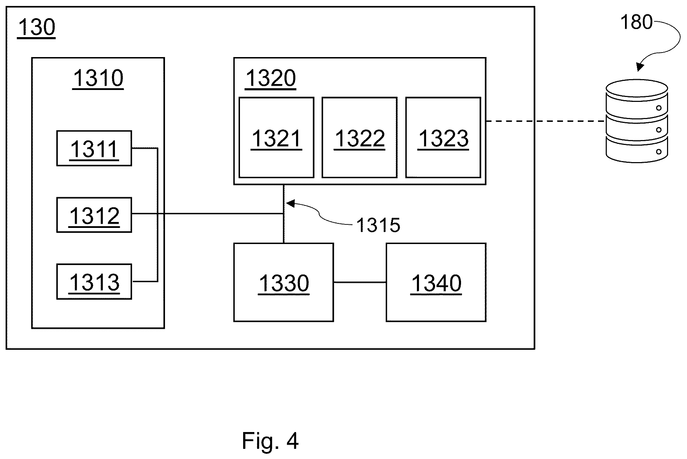

Figure 4 illustrates a block diagram depicting a gateway 130.

As shown in Figure 4, the gateway 130 comprises a control unit 1310, a transceiver 1320, a power module 1330, and a battery 1340.

In turn, the control unit 1310 comprises a processor 1311, a system memory 1312 such as, for example, a DRAM or SRAM memory, and a non-volatile memory 1313. The processor 1311, the system memory 1312, and the non-volatile memory 1313 are interconnected and coupled to the peripherals, i.e., the transceiver 1320 and the power module 1330, via a system bus 1315.

In various embodiments, the control unit 1310 is configured to implement, via specific software code residing in the non-volatile memory 1313 and executed via the processor 1311 and the system memory 1312, the characteristics of the gateway 130 according to the present description.

In various embodiments, the control unit 1310 is configured to receive via the transceiver 1320 one or more update packets 840 containing software code, and consequently perform an update of the software code residing in the non-volatile memory 1313 according to OTAP, Over-The-Air Programming, update procedures, per se known.

Furthermore, the control unit 1310 is configured to transmit to the tags 110 and/or the locators 120 one or more configuration packets 850 comprising configuration instructions. In particular, the configuration instructions contained in a configuration packet 850 can comprise indications for configuring a tag 110 or a locator 120 in a desired energy saving mode, such as for example the low power mode P1 or the low latency mode P2 described above, or for adjusting transmission parameters, such as the advertising interval D, in a tag 110.

In various embodiments, each gateway 130 is configured to send a configuration packet 850 to each locator 120 concurrently with the startup of the positioning system 100, so as to allow the synchronization of the clocks of the locators 120.

In general, each gateway 130 can send configuration messages 850 to one or more locators 120 and one or more tags 110 so as to reorganize the Mesh network and allow greater energy efficiency.

For example, in response to verifying that the signal power indices R contained in reading messages 820 originating from respective locators 120, and indicating the tag 110 of origin of the signal, indicate a good signal power, the gateway 130 can send a configuration packet 850 to reconfigure the tag 110 of origin to reduce the transmission power and/or modify the advertising interval D so as to increase the autonomy of the positioning system 100.

Similarly to the localization messages 810, the reading messages 820, and the update packets 840, the configuration packets 850 are transmitted in broadcast mode, and are therefore received, and consequently accepted, discarded, or retransmitted, by each device connected to the Bluetooth Mesh network.

The gateway 130 can furthermore receive from the remote processing system 180 further directives, transmitted via the MQTT protocol, to configure the energy saving modes of each locator 120.

In fact, in various embodiments, the remote processing system 180 is configured to determine an energy saving mode for each locator 120 based on positions 830, determined starting from the reading messages 820 originating from the respective locator 120, whose details will be made clearer later in the present description.

The power module 1330 of the gateway 130 comprises a configurable input port to interchangeably couple the power module 1330 to the battery 1340, or to an external power source, and is configured to supply the gateway 130 with a stable supply voltage.

The transceiver 1320 comprises a Bluetooth radio module 1321, a Wi-Fi radio module 1322, and a cellular radio module 1323.

The Bluetooth radio module 1321 is configurable to operate in Bluetooth Low Energy mode, in particular according to the Bluetooth 5.1 standard, and Bluetooth Mesh, and comprises one or more antennas.

As in the tags 110, and in the locators 120, the Bluetooth radio module 1321 can receive and transmit data on any of the Bluetooth Classic channels (79 channels of 1 MHz, between 2.402 and 2.480 GHz) and Bluetooth Low Energy (40 channels of 2 MHz, subdivided into 3 advertising channels and 37 data transfer channels), in the frequency bands used by Bluetooth, i.e., the 2.4 GHz ISM band (2.400-2.4835 GHz).

As said above, the gateways 130 are nodes that are part of the Mesh network. Therefore, during a communication performed via the Mesh network, a gateway 130 can receive messages or data that are not intended for said gateway 130 but for a further device included in the positioning system 100 such as, for example, a tag 110 or a locator 120.

In such cases, the gateway 130, specifically via its own Bluetooth radio module, is configured to receive data packets and consequently verify if each packet is intended for it by using a unique identifier, such as for example a MAC address. In response to verifying that one or more received packets are intended for another device, the radio module of the gateway 130 retransmits the one or more packets, which thus circulate through the Mesh network until they reach the designated recipient node.

In this regard, in various embodiments the gateway 130 is equipped with a temporary storage queue, for example implemented according to a FIFO (First-In, First-Out) logic and included in its respective Bluetooth radio module. This queue is configured to contain messages intended for transmission and those received that need to be retransmitted in the mesh network. In this way, packets are handled in order of arrival, ensuring that each message is transmitted or retransmitted in a sequential and orderly manner.

The presence of the queue also allows avoiding packet loss in case of momentary congestion of the radio channel, ensuring continuity and reliability in the propagation of information within the mesh network and towards the processing systems connected to the gateway 130.

The gateway 130 is configured to receive localization messages 810 forwarded by the locators 120 and, consequently, transmit the one or more received localization messages 810 towards an external processing system. The transmission of the localization messages 810 occurs by sending a new packet, having the processing system as the recipient, defined within the message 810 by a unique identifier such as, for example, a MAC address.

Furthermore, the Bluetooth radio module 1321 comprises a cryptographic module for securely managing Mesh network keys, and a non-volatile memory for storing network configurations, and is configured to encrypt exchanged messages. For example, the transceiver 1220 is configured to encrypt messages using the AES128 encryption algorithm.

The Wi-Fi radio module 1322 allows the gateway 130 to connect to a Wi-Fi network to transmit and receive data from local networks or global networks such as, for example, the Internet, and comprises one or more antennas.

Similarly, the cellular radio module 1323 allows the gateway 130 to connect to a cellular network to exchange data via the Internet, or via SMS messages, and comprises one or more antennas.

In response to receiving a plurality of reading messages 820, originating from respective locators 120 in response to detecting a tag 110 within the respective range P, the gateway 130 stores, for example in the non-volatile memory 1313, the reading messages 820 received from the respective locators 120.

Consequently, the gateway 130 forwards the reading messages 820 to the remote processing system 180. In various embodiments, the gateway 130 is configured to forward the reading message 820 via the Internet using the transceiver 1320. For example, the gateway 130 can forward a reading message 820 to the remote processing system 180 via an Internet connection through a cellular network.

In general, the gateway 130 transmits the reading message 820 via its own transceiver 1320 using the MQTT protocol. For this purpose, the gateway 130 can deliver the third reading message 820 via a local network or via the Internet, using for example either the Wi-Fi radio module 1322 or the cellular radio module 1323.

Specifically, the transmission of reading messages 820 from the gateway 130 to the remote processing system 180 occurs in response to the reception of the data, i.e., the reception times T, the signal power indices R, and the identifiers of the tags 110 contained in the localization messages 810. In this way, the gateways 130 do not transmit empty third reading messages 820, allowing the solution described herein an advantageous energy saving and a consequent extension of the battery 1340 life of the gateways 130.

In accordance with the present solution, the remote processing system 180 receives the reading messages 820 from the locators 120, and stores their content, i.e., identifier U of the tag 110, reception time T and power index R, in specific data structures.

In various embodiments, the remote processing system 180 is configured to determine an approximate position 829 of a tag 110 based on the data contained in the plurality of reading messages 820 received from the gateways 130, and consequently apply a correction to the found approximate position 829 based on a topological description of the operating environment 20, thus obtaining a position 830.

Therefore, the determination of the position 830 of a tag 110 within the operating environment 20 employs topological information concerning the operating environment 20.

For this purpose, the remote processing system 180 comprises one or more maps of the operating environment 20, for example stored in a non-volatile memory, indicating portions of the operating environment 20 where tags 110 are not allowed, designating one or more forbidden areas 20a.

For example, in embodiments designated to operate in ports, where the tags 110 are provided on recreational vessels, a forbidden area 20a can indicate a pier or a quay, where therefore no vessel can be found. The remote processing system 180 is therefore configured to exclude the one or more forbidden areas 20a in the determination of the position 830.

This advantageously allows the positioning system 100 to improve the precision with which the position 830 of tags 110 is determined, reducing position detection errors.

The remote processing system 180 is configured to determine a number N of locators 120 that have detected a specific tag 110 in the vicinity of a given instant of time, and a number N - 1 time differences TD between the reception times T relating to the same specific tag 110.

For example, the remote processing system 180 can determine the number N of locators 120 that detect a specific tag 110 at a given instant by determining if the reading messages 820 received contain the unique identifier U of the desired tag 110, combined with respective substantially similar reception times T.

In particular, in various embodiments each time difference TD can comprise more than one value, for example 40 values in the case where all 40 available BLE channels are employed for the transmission of the localization messages 810.

Therefore, considering an exemplary scenario in which 40 BLE channels are employed for the transmission of the localization messages 810, a locator 120 determines the reception time of each copy of the received localization message 810, and stores all 40 values in a reception time array T, and transmits the found values to a gateway 130 in a reading message 820. Similarly, a second locator 120 that receives the localization message 810 determines the reception time of each copy of the localization message 810 and stores the 40 found values in another reception time array T, and consequently transmits the found values in another reading message 820 to the gateway 130. Subsequently, the gateway 130 determines a time difference array TD by computing the difference between the two reception time vectors T.

Based on the data received in the reading messages 820, in particular the power indices R, the number of detections N, and the N - 1 time differences TD, or on the time of arrival T in the case where a tag 110 is detected by only one locator 120, the remote processing system 180 determines the approximate position 829 of the tag 110 in the operating environment 20 by applying a variable multilateration algorithm.

Specifically, variable multilateration is a localization and tracking technique that allows determining the approximate position 829 of the tags 110 through the computing of the differences in the times of arrival TD - TDoA, Time Difference of Arrival - of the localization signal 810, emitted towards multiple geographically distributed receivers, i.e., the locators 120 arranged in the operating environment 20, where the number and configuration of the receivers used can vary dynamically based on operating conditions, signal quality and required precision.

In accordance with the solution described herein, variable multilateration is applied to each detected time difference TD, relative to each of the BLE channels employed for the transmission of the localization message 810. In this way, it is possible to increase the number of available data, thereby increasing the precision obtained from the variable multilateration.

In other words, employing the reception times for each BLE channel used in the localization system 100 according to the present solution advantageously allows increasing the data available for applying the variable multilateration procedure, and thus facilitates obtaining greater precision in localization.

Furthermore, thanks to the use of adaptive algorithms capable of selecting the most effective combination of locators 120, considering factors such as relative geometry, the signal-to-noise ratio derived from the power index R, and data redundancy to guarantee a robust solution even in the presence of interference or partial signal loss, the positioning system 100 is able to automatically compensate for variations in the availability of locators 120 and data quality, reconfiguring itself in real time to maintain optimal performance.

Subsequently, the remote processing system 180 applies to the found approximate position 829 of the tag 110 a correction performed based on the topological description of the operating environment 20, to obtain the position 830 of the tag 110.

In particular, the remote processing system 180 is configured to apply a correction to the approximate position 829 determined via variable multilateration in response to determining that said position is comprised in a forbidden area 20a. The correction applied to the approximate position 829 allows localizing the tag 110 in a portion of the operating environment 20 where the presence of a tag 110 is permitted.

For example, in embodiments intended for use in ports, where the tags 110 are provided on recreational vessels, the correction applied by the remote processing system 180 avoids the localization of tags 110 in forbidden areas 20a, indicating for example a pier or a quay, where it is therefore not possible to find any vessel, returning a more precise position value 830.

Therefore, the remote processing system 180 is configured to exclude the one or more forbidden areas 20a in the determining of the position 830.

Consequently, the data containing the positions 830 of each tag 110 detected in the operating environment 20 are stored in a memory of the remote processing system 180 for future processing and for display.

As anticipated, the remote processing system 180 can determine an energy saving mode for a tag 110 based on the positions 830 detected starting from the reading messages 820 originating from the respective locator 120.

For this purpose, the remote processing system 180 is configured to compute a distance between each position 830 determined in accordance with the solution described herein, and in response to determining that said distance is less than a predetermined threshold value, modify an advertising interval D of a respective tag 110, sending configuration directives to one or more gateways 130 via the MQTT protocol.

Consequent to the reception of the configuration directives via the MQTT protocol, i.e., the configuration message 850, the gateway 130 forwards the configuration message 850 onto the Mesh network so as to deliver the configuration packet 850 to the one or more tags 110 and/or to the one or more locators 120 designated as recipients of the configuration message 850.

In particular, the configuration directives comprise a configuration message 850, comprising in turn indications regarding the advertising interval D.

For example, in embodiments of the present solution intended for use in ports, the remote processing system 180 can determine that a tag 110, configured in the low power consumption mode, provided on a ship is moving slowly, and consequently can configure, via the sending of a configuration packet 850 through the gateway 130, the tag 110 provided on said ship with a longer advertising interval D, thus facilitating energy saving.

In other words, the remote processing system 180 is configured to determine a speed at which a specific tag 110 is moving based on at least one detected position 830. Based on said speed, the remote processing system 180 modifies the advertising interval D associated with the tag 110, and consequently transmits via the one or more gateways 130 a configuration packet 850 comprising the found value of the advertising interval D.

In various embodiments, the remote processing system 180 comprises additional topographic information regarding the operating environment 20, comprising portions of the operating environment 20 designated as restricted access areas 20b.

In response to detecting that the position 830 of one or more tags 110 is comprised in a restricted access area 20b, the remote processing system 180 signals the presence of a tracked object, for example by sending a notification message via the Internet to one or more electronic devices external to the localization system 100.

In this regard, the remote processing system 180 is coupleable to one or more screens, and is configured to display on said one or more screens a graphical representation of the detected positions 830 of the tags 110 in the operating environment 20, and to notify by means of a graphical indicator on the one or more screens the one or more tags 110 having a position 830 comprised in a limited access area 20b.

The detecting of the positions 830 described above can occur in a periodic manner, so as to allow the tracking of the objects equipped with tags 110 in the operating environment 20.

In various embodiments, each gateway 130 is configured to receive from the remote processing system 180, for example via the Internet, through the transceiver 1320, one or more update packets 840 comprising software code, for example a firmware.

In response to verifying that the update packet 840 is addressed to tags 110 or locators 120, the gateway 130 transmits the one or more update packets 840 via the transceiver 1320 so that the tags 110 and locators 120 receive it, for example via the Bluetooth radio 1321 configured in Broadcast mode. In this way, the localization system 100 can implement OTAP, Over-The-Air Programming, firmware update procedures.

In light of the above, the solution described herein advantageously provides a precise positioning system 100 comprising lightweight components and having a long battery life, thus solving the problems associated with some systems listed in the prior art.

Thanks to the adoption of the Mesh network, the positioning system 100 is able to automatically organize data transmissions within it.

In fact, the present solution facilitates the delivery of a localization service without interruptions thanks to the capacity of the Mesh network to self-regulate and self-balance without interruptions, even in case of problems with one or more nodes such as the tags 110 or the locators 120. These characteristics also facilitate an easy installation and initial configuration of the positioning system 100 in the operating environment 20.

The localization system 100 according to the present solution is advantageous due to improved reliability and resilience thanks to the adoption of the Mesh network described above, which allows an automatic reorganization of the nodes in case of faults so as to determine alternative paths within the network.

The localization system 100 according to the present solution is further advantageous from the aspect of energy efficiency, indeed each node is capable of finding the best path towards the gateway, and does not require the memorizing of routing tables, thanks to the use of routing algorithms based on the search for the least energy-intensive path. This facilitates the creation of large networks.

The energy efficiency of the localization system 100 is further improved thanks to the implementation of low power consumption modes P1 in the nodes of the system, allowing the devices to adjust the transmission power at every occurrence.

Furthermore, the optimization of the Mesh network allows obtaining a localization precision with an error of less than one meter, while simultaneously containing operational, infrastructure and maintenance costs, and facilitating a rapid installation of the positioning system 100 in the operating environment 20.

In general, various embodiments of the solution described herein also relate to a method for localizing objects in an operating environment executable via the positioning system described above.

Substantially, the method comprises periodically sending localization messages 810 via a tag 110 provided on an object whose position is to be detected, wherein the sending cadence of the localization messages 810 is determined by an advertising interval D, and the localization message 810 comprises a unique identifier of the tag 110.

Subsequently, the localization message 810 is received by a plurality of locators 120, which associate with each received localization message 810 a reception time T and a power index R.

Consequently the locators 120 transmit a reading message 820 comprising the identifier U of the tag 110, the reception time T and the power index R of the localization message 810.

Subsequently, the reading messages 820 are received and forwarded to a remote processing system 180 via one or more gateways 130.

Finally, the remote processing system 180 determines an approximate position 829 of a tag 110 within the operating environment 20 based on the reception times T and the power indices R using a variable multilateration algorithm, and applies a correction to the approximate position 829 based on spatial information 20b of the operating environment 20 to obtain a position 830 of a tag 110 within the operating environment 20.

Note also that the method according embodiments of the present description can comprise further steps for implementing the operations performed by the system described in the present document.

It will be evident from the foregoing that the positioning system according to the solution described herein allows tracking objects in an operating environment in an effective and reliable manner, thanks to the use of Mesh networks coupled with a variable multilateration algorithm.

Naturally, without prejudice to the underlying principle, the details of construction and the embodiments of the localization system and the method may be widely varied with respect to what has been described and illustrated, without thereby departing from the scope of the present solution.

## Claims

1. Positioning system (100) usable in an operating environment (20), comprising:
- one or more tags (110) comprising an identifier (U), a transceiver (1120), and a control unit (1110) configured to periodically send localization messages (810) comprising the identifier (U) via the transceiver (1120), wherein the sending cadence of the localization messages (810) is determined by an advertising interval (D) ;
- a plurality of locators (120) comprising a transceiver (1220) and a control unit (1210) configured to receive one or more localization messages (810) via the transceiver (1220), associate with each received localization message (810) a reception time (T) and a power index (R), and transmit a reading message (820) comprising the identifier (U) of the tag (110), the reception time (T) and the power index (R) of the localization message (810);
- one or more gateways (130) comprising a transceiver (1320) and a control unit (1310) configured to receive one or more reading messages (820) via the transceiver (1320), and forward the one or more reading messages (820) via the transceiver (1320); and
- a remote processing system (180) comprising spatial information (20a; 20b) of said operating environment (20), the remote processing system (180) being configured to receive the one or more reading messages (820) forwarded by the one or more gateways (130), determine an approximate position (829) of a tag (110) within the operating environment (20) based on said reception times (T) and said power indices (R) using a variable multilateration algorithm, and apply a correction to the approximate position (829) based on said spatial information (20a; 20b) of said operating environment (20) to obtain a position (830) of a tag (110) within the operating environment (20).

2. Positioning system (100) according to claim 1, wherein:
- each tag (110) is configurable in a low power consumption configuration state (P1) or a low latency configuration state (P2), the low power consumption configuration (P1) and the low latency configuration (P2) comprising respective values of advertising interval (D) and transmission power (W) usable for configuring the respective transceiver (1120);
- the one or more gateways (130) are configured to receive from the remote processing system (180) one or more configuration packets (850) comprising instructions for configuring the one or more tags (110) in the low power consumption mode (P1) or in the low latency mode (P2), and consequently transmit to the one or more tags (110) the one or more configuration packets (850); and
- the remote processing system (180) is configured to determine a speed at which a tag (110) is moving based on at least one detected position (830), based on said speed modify the advertising interval (D) associated with said tag (110), and consequently transmit via the one or more gateways (130) a configuration packet (850) comprising the value of the advertising interval (D) found.

3. Positioning system (100) according to claim 2, wherein the one or more tags (110) comprise one or more sensors (1150) coupled to said control unit (1110), and wherein each tag (110) configured in the low power consumption mode (P1) is configured to initiate the transmission of localization messages (810) in response to detecting via the one or more sensors (1150) one or more values exceeding a predetermined threshold value.

4. Positioning system (100) according to any one of the preceding claims, wherein the remote processing system (180) is configured to store in said spatial information (20a; 20b) restricted access areas (20b) in the operating environment (20), and in response to detecting that one or more positions (830) of a respective tag (110) are included in a restricted access area (20b), transmit a notification signal.

5. Positioning system (100) according to any one of the preceding claims, wherein said remote processing system (180) is configured to determine respective time differences (TD) based on said reception times (T), and determine the approximate position (829) of a tag (110) based on the time differences (TD) and said power indices (R).

6. Positioning system (100) according to claim 5, wherein:
- each tag (110) is configured to transmit to a locator (120) multiple copies of each localization message (810) on respective different frequency bands, preferably transmitting each copy of the localization message (810) on a respective Bluetooth Low Energy channel between 0 and 39,
- each reception time (T) is a vector comprising the reception time in a respective locator (120) of each copy of the localization message (810) transmitted on a respective frequency band, and
- each time difference (TD) is a vector determined by performing the difference between a first reception time vector (T), and a second reception time vector, determined in respective locators (120).

7. Positioning system (100) according to any one of the preceding claims, wherein each tag (110) and each locator (120) are implementable via a system (110, 120) comprising:
- the transceiver (1120, 1220);
- a power module (1130, 1230);
- a battery (1140, 1240) coupled to the power module (1130, 1230);
- one or more sensors (1150); and
- a control unit (1110, 1210) comprising:
- a processor (1111, 1211);
- a system memory (1112, 1212);
- a non-volatile memory (1113, 1213) comprising software code for selectively configuring the system (110, 120) to operate as a tag (110) or as a locator (120).

8. Positioning system (100) according to any one of the preceding claims, wherein the one or more tags (110), the plurality of locators (120), and the one or more gateways (130) are configured to perform a software update in response to receiving an update packet (840).

9. Positioning system (100) according to any one of the preceding claims, wherein the one or more tags (110), the plurality of locators (120), and the one or more gateways (130) are configured to transmit and receive information in broadcast mode via respective transceivers (1120, 1220, 1320) to form a Mesh-type mesh network wherein each tag (110), locator (120), or gateway (130) is a node of the network, and wherein the transceivers (1320) of the one or more gateways (130) comprise a Wi-Fi radio module (1322) and/or a cellular radio module (1323), the one or more gateways (130) exchanging data with the remote processing system (180) via the Internet, in particular in accordance with the MQTT protocol, via the transceiver (1320).

10. Positioning system (100) according to any one of the preceding claims, wherein the remote processing system (180) is couplable to one or more screens, and is configured to display on said one or more screens a graphical representation of the positions (830) of the tags (110) detected in the operating environment (20), and to notify by means of a graphical indicator on said screen one or more tags (110) having a position (830) included in a restricted access area (20b).

11. Method for localizing objects in an operating environment (20) executable by the positioning system (100) according to claims 1 to 10, comprising performing the steps of:
- periodically sending localization messages (810) via a tag (110) provided on an object whose position is to be detected, wherein the sending cadence of the localization messages (810) is determined by an advertising interval (D), and the localization message (810) comprises a unique identifier of the tag (110);
- receiving the localization message (810) at a plurality of locators (120), associating with each received localization message (810) a reception time (T) and a power index (R), and consequently transmitting a reading message (820) comprising the identifier (U) of the tag (110), the reception time (T) and the power index (R) of the localization message (810);
- receiving one or more reading messages (820) and forwarding the one or more reading messages (820) via one or more gateways (130);
- receiving the one or more reading messages (820) forwarded by the one or more gateways (130) via a remote processing system (180), determining an approximate position (829) of a tag (110) within the operating environment (20) based on said reception times (T) and said power indices (R) using a variable multilateration algorithm, and applying a correction to the approximate position (829) based on spatial information (20a; 20b) of said operating environment (20) to obtain a position (830) of a tag (110) within the operating environment (20).
